# DEMANDE DE BREVET EUROPEEN

(11) **EP 1 712 392 A2**
(43) Date de publication de la demande: **18.10.2006**
(21) Numéro de dépôt: 06112122.4
(22) Date de dépôt: 31.03.2006
(51) Int. Cl.: B60J 10/00, B60J 10/02, B60J 1/00

(54) **Dispositif d'occultation à cadre rétractable, procédé de montage et véhicule automobile correspondant**

(30) Priorité: 14.04.2005 FR 0503751
(71) Demandeur: WAGON SAS, 79302 Bressuire Cédex (FR)
(72) Inventeur: Cousson, François, 79430 La Chapelle Saint Laurent (FR); Devanne, Christophe, 79300 Chambroutet (FR)
(74) Mandataire: Bioret, Ludovic

(57) **Abrégé**

L'invention concerne un dispositif d'occultation d'une baie ménagée dans la carrosserie d'un véhicule, du type comprenant au moins un panneau vitré (5) sur lequel est monté un cadre (3) qui peut prendre au moins deux états : un état temporaire de mise en place, dans lequel les dimensions d'au moins une partie de la bordure intérieure (31) du cadre (3) sont supérieures aux dimensions du panneau vitré (5), de façon à permettre la mise en place dudit panneau vitré (5) dans ledit cadre (3) ; et un état défmitif rétracté de maintien, dans lequel ladite bordure intérieure (31) du cadre (3) chevauche l'ensemble de bords du panneau vitré (5).

## Description

### 1. Domaine de l'invention

Le domaine de l'invention est celui de l'automobile. Plus précisément, l'invention concerne l'occultation des ouvertures d'un véhicule automobile. Elle concerne en particulier les dispositifs d'occultation d'une baie ménagée dans la carrosserie d'un véhicule.

### 2. Solutions de l'art antérieur

Les baies ménagées dans la carrosserie des véhicules sont souvent occultées par des dispositifs d'occultation comprenant des surfaces vitrées. Selon les cas, ces surfaces vitrées peuvent être fixes ou mobiles. L'invention concerne particulièrement, mais pas uniquement, les dispositifs d'occultation comprenant une surface vitrée fixe.

Pour faciliter le montage des surfaces vitrées, ou vitres, sur la carrosserie des véhicules, ces vitres sont souvent assemblées préalablement dans un cadre. En effet, le cadre permet de faciliter le montage sur la carrosserie.

Depuis quelques années sont apparues sur les véhicules des surfaces vitrées dites « flush », dans lesquelles les bords de la surface vitrée sont affleurants avec la carrosserie. L'assemblage de la vitre sur son cadre est alors compliqué. En effet, les deux faces de la vitre ne peuvent pas être maintenues par le cadre. La solution généralement utilisée consiste alors à coller les bords de la vitre sur un renfoncement du cadre.

Cette solution permet bien d'obtenir une vitre affleurante avec le cadre qui la supporte. Elle présente cependant des difficultés de mise en oeuvre. Notamment, les opérations de collage du verre sur un autre matériau présentent des difficultés, et nécessitent un temps assez long.

### 3. Objectifs de l'invention

L'invention a notamment pour objectif de pallier ces inconvénients de l'art antérieur.

Plus précisément, un objectif de l'invention est de fournir un dispositif d'occultation d'une baie ménagée dans la carrosserie du véhicule, comprenant une vitre et un cadre de liaison de cette vitre avec la carrosserie, dans lequel l'assemblage de la vitre dans son cadre est particulièrement facile et efficace.

De façon particulière, l'invention a pour objectif que cet assemblage de la vitre sur son cadre puisse être fait de manière très rapide, et sans outillage particulier ou complexe.

Un autre objectif de l'invention est de mettre en oeuvre un tel dispositif qui permette d'obtenir facilement un aspect affleurant, ou « flush », entre le cadre et la vitre.

### 4. Résumé de l'invention

Ces objectifs, ainsi que d'autres qui apparaîtront par la suite, sont atteints à l'aide d'un dispositif d'occultation d'une baie ménagée dans la carrosserie d'un véhicule, du type comprenant au moins un panneau vitré sur lequel est monté un cadre, qui, selon l'invention peut prendre au moins deux états :
- un état temporaire de mise en place, dans lequel les dimensions d'au moins une partie de la bordure intérieure du cadre sont supérieures aux dimensions du panneau vitré, de façon à permettre la mise en place du panneau vitré dans le cadre ;
- un état définitif rétracté de maintien, dans lequel la bordure intérieure du cadre chevauche l'ensemble des bords du panneau vitré.

Les éléments du dispositif d'occultation peuvent ainsi être assemblés de façon particulièrement facile et rapide

Selon un mode de réalisation particulier de l'invention, le cadre comprend au moins une zone élastique permettant, dans l'état temporaire de mise en place, un allongement des bords du cadre facilitant la mise en place du panneau vitré.

Grâce à ces zones élastiques, il est particulièrement facile de déformer le cadre pour le faire passer dans son état temporaire de mise en place, et ainsi positionner correctement la vitre.

Avantageusement, le cadre comprend au moins trois portions sensiblement rectilignes et au moins deux desdites portions comprennent une desdites zones élastiques.

Selon une autre variante de ce mode de réalisation, le cadre comprend au moins trois portions sensiblement rectilignes et en ce qu'au moins deux des angles reliant les portions constituent les zones élastiques.

Ces deux variantes permettent une déformation facile du cadre, et permettent de s'adapter à de nombreuses formes de vitre.

De façon avantageuse, les zones élastiques et les zones non élastiques du cadre présentent un aspect homogène.

Il n'est ainsi pas nécessaire de le recouvrir d'un enjoliveur, et il est possible de lui donner un aspect affleurant.

Préférentiellement, les zones élastiques sont constituées de l'un des matériaux suivants : EPDM (Ethylène Propylène Diène Monomère), TPE (Thermo Plastique Elastomère), santoprene (marque déposée), élastomère, polyuréthane, ou silicone.

Selon un autre mode de réalisation de l'invention, le cadre est entièrement constitué d'un matériau élastique permettant, dans l'état temporaire de mise en place, un allongement des bord du cadre facilitant la mise en place du panneau vitré.

Ce mode de réalisation présente l'avantage de simplifier la réalisation du cadre. Il est également possible, dans ce mode de réalisation, d'envisager un montage en force de la vitre.

Selon un autre mode de réalisation, le cadre est constitué d'un matériau dilatable à la chaleur permettant, dans l'état temporaire de mise en place dans lequel le cadre est chauffé, un allongement des bord du cadre facilitant la mise en place du panneau vitré.

Avantageusement, le cadre comprend ou porte un joint destiné à venir en contact avec l'une des faces du panneau vitré.

Ce joint permet d'assurer l'étanchéité entre la vitre et le cadre, et peut également contribuer à la solidarisation de la vitre sur le cadre.

De façon préférentielle, au moins une des faces du cadre est affleurante avec la surface du panneau vitré.

L'invention concerne également un procédé de montage d'un tel dispositif d'occultation, qui comprend les étapes suivantes :
- obtention du panneau vitré,
- obtention du cadre,
- écartement d'au moins un des bords du cadre, dans l'état temporaire de mise en place
- pose du panneau vitré dans le cadre,
- rétractation des bords du cadre, dans l'état de maintien.

L'invention concerne aussi un véhicule automobile comprenant au moins un tel dispositif d'occultation.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente en vue de face un dispositif d'occultation selon un premier mode de réalisation de l'invention ;
- la figure 2 illustre représente en vue de face un dispositif d'occultation selon un second mode de réalisation de l'invention ;
- la figure 3 représente une section partielle des éléments constituants un dispositif d'occultation selon l'invention en cours d'assemblage ;
- la figure 4 représente une section partielle d'une partie du dispositif d'occultation de la figure 3 assemblé ;
- la figure 5 représente de façon schématique le procédé de montage d'un dispositif d'occultation selon l'invention.

### 6. Description détaillée de l'invention

### 6.1 Rappel du principe de l'invention

Le principe général de l'invention repose sur un cadre dont les différents éléments peuvent s'écarter pour permettre d'y mettre en place une vitre. Une fois la vitre mise en place, le cadre se rétracte (soit par effet élastique, soit par effet de thermo dilatation) en reprenant sa forme normale, et maintient la vitre en chevauchant ses bords.

### 6.2 Principe du cadre chevauchant les bord

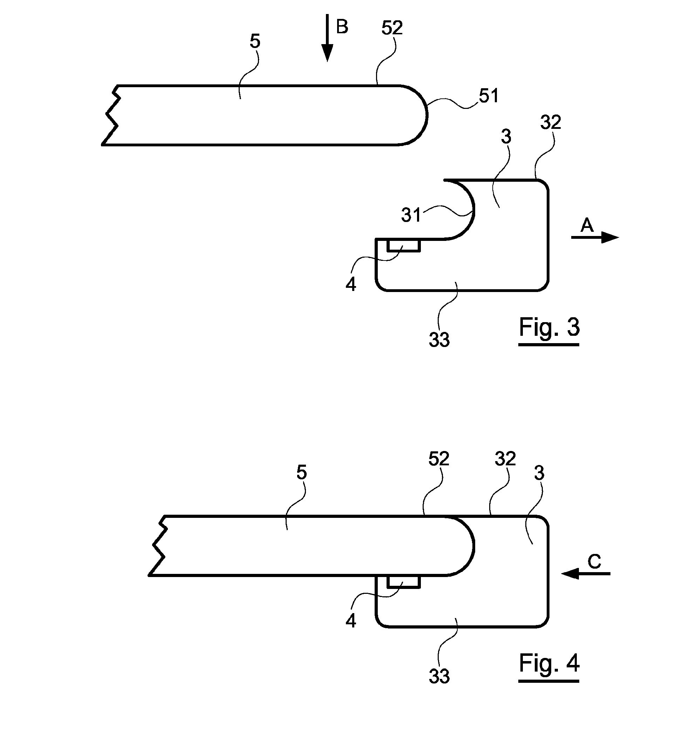

La figure 3 représente une section partielle d'un côté d'un cadre selon l'invention, et d'une partie de la vitre, ou panneau vitré 5, en cours de montage. La figure 4 représente ces mêmes éléments montés.

Le cadre 3 est destiné à entourer les bords du panneau vitré 5, et à le maintenir. Pour cela, la bordure intérieure 31 doit chevaucher l'ensemble des bords 51 du panneau vitré 5. Pour faciliter ce maintien, les bords 51 du panneau vitré 5 peuvent avoir une forme non-droite, par exemple arrondie, et la bordure intérieure 31 présente une forme complémentaire à celle des bords 51. Le cadre assemblé sur le panneau vitré, comme l'indique la figure 4, chevauche ainsi l'ensemble des bords du panneau vitré 5, maintient donc efficacement celui-ci.

Pour assurer le montage du panneau vitré 5 dans le cadre 3, on met le cadre 3 dans une état temporaire de mise en place, dans lequel on écarte ses éléments, comme l'indique la flèche A sur la figure 3. Le déplacement de chaque élément peut être, par exemple, de l'ordre de 4 à 8 mm. Les dimensions de la bordure intérieure 31 du cadre sont alors supérieures aux dimensions du panneau vitré 5.

Une fois que le cadre 3 est dans son état temporaire de mise en place, représenté par la figure 3, les éléments du cadre 3 étant déplacés, le panneau vitré 5 peut être mis en place contre le cadre 3 par un mouvement indiqué par la flèche B de la figure 3. Le cadre 3 est alors ramené dans un état défmitif de maintien en revenant à ses dimensions d'origine. Les bordures intérieures 31 du cadre 3 viennent alors chevaucher les bords du panneau vitré 5, comme l'indique la flèche C.

Comme le montre la figure 4, le cadre 3 présente une surface extérieure 32 destinée à être affleurante avec la surface extérieure 52 du panneau vitré. Le dispositif d'occultation formé par le panneau vitré 5 et le cadre 3 présente donc une face plane, ayant un aspect dit « flush ». Sur l'autre face, destinée à être tournée vers l'intérieure du véhicule, le cadre 3 peut présenter une surépaisseur 33 par rapport au panneau vitré 5. De ce côté, un enjoliveur peut améliorer l'aspect du cadre 3, en cachant la surépaisseur 33.

Un joint 4 peut avantageusement être placé dans le cadre 3, dans un emplacement prévu spécialement à cet effet dans le cadre 3. Ce joint assure l'étanchéité entre le panneau vitré 5 et le cadre 3. Il peut également participer à l'adhérence du panneau vitré 5 sur le cadre 3.

### 6.3 Cadre comportant des zones élastiques

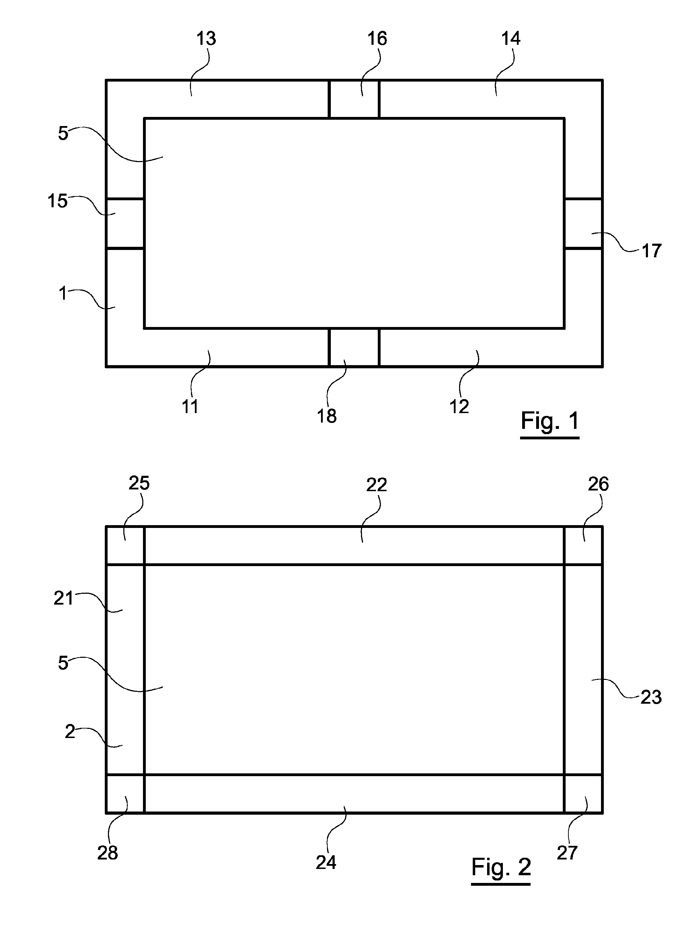

La figure 1 représente un dispositif d'occultation selon un mode de réalisation particulier de l'invention. Sur cette figure, un cadre 1 entoure les bords d'un panneau vitré 5.

Le cadre 1 est constitué de quatre parties rigides 11, 12, 13 et 14 formant des équerres, séparées par quatre zones de liaison élastiques ou zone élastique, ou parties élastiques 15, 16, 17 et 18. Ces différentes parties peuvent, par exemple, être soudées entre elles. Alternativement, les parties élastiques peuvent être surmoulées sur les parties rigides.

Les parties rigides du cadre sont par exemple formées de thermoplastique rigide, alors que les parties élastiques sont formées d'un matériau plastique tel que par exemple le EPDM (Ethylène Propylène Diène Monomère), TPE (Thermo Plastique Elastomère), santoprene (marque déposée), l'élastomère, le polyuréthane, ou le silicone, qui permettent une déformation élastique.

De façon avantageuse, ces deux matériaux auront le même aspect de surface. Ainsi, le cadre, et plus particulièrement sa surface extérieure, a un aspect unique homogène quand il est posé autour de la vitre. Il n'y a ainsi aucune différence d'aspect entre les zones de liaison élastiques 15, 16, 17 et 18, et les parties rigides 11, 12, 13 et 14, malgré la différence de matériau. Les parties rigides 11, 12, 13 et 14 peuvent elles-mêmes être constituées de deux parties rectilignes soudées l'une à l'autre.

Les quatre parties élastiques 15, 16, 17 et 18, ou zones de liaison élastique, permettent d'allonger simultanément les quatre côtés du rectangle que forme le cadre 1. Il suffit pour cela d'exercer une traction simultanément sur les quatre parties rigides 11, 12, 13 et 14. Les zones de liaison élastique 15, 16, 17 et 18 sont alors sous tension, et le cadre 1 est dans son état temporaire de mise en place. Il est alors possible de positionner facilement la vitre dans le cadre.

En relâchant la traction sur les quatre parties rigides 11, 12, 13 et 14, le cadre reprend ses dimensions originales dans son état définitif rétracté de maintien, et bloque la vitre.

La figure 2 présente un dispositif d'occultation selon un autre mode de réalisation particulier. Là encore, un cadre 2 entoure les bords d'un panneau vitré 5. Le cadre 2 est constitué de quatre parties rigides 21, 22, 23 et 24 formant les quatre côtés du cadre rectangulaire. Les quatre angles sont constitués des quatre parties élastiques 25, 26, 27 et 28.

Comme dans le cas précédent, il est facile d'écarter les quatre parties rigides 21, 22, 23 et 24 les unes des autres pour positionner la vitre 5. Ce deuxième mode de réalisation solution présente l'avantage que le cadre est constitué de moins de parties différentes ou de parties plus simples.

### 6.4 Cadre constitué de matériau élastique

Selon un autre mode de réalisation de l'invention, le cadre peut être entièrement constitué d'un matériau présentant suffisamment d'élasticité pour permettre le déplacement désiré de ses bordures. La mise en place du panneau vitré 5 peut alors se faire de la même manière que dans les modes de réalisation précédents, en écartant les différents éléments.

Une autre solution peut également être de monter en force la vitre dans le cadre. Dans ce cas, l'écartement des différents éléments est assuré par le cadre lui-même.

### 6.5 Cadre dilatable ou retractable avec la chaleur

Selon un autre mode de réalisation de l'invention, le cadre peut également être constitué d'un matériau rigide se dilatant sous l'effet de la chaleur. Il faut alors chauffer le cadre pour lui faire prendre son état temporaire de mise en place, dans lequel ses bordures intérieures sont suffisamment éloignées pour permettre la mise en place de la surface vitrée.

En refroidissant, le cadre se rétracte et reprend son état définitif de maintient, dans lequel sa bordure intérieure chevauche les bords du panneau vitré.

Alternativement, le cadre peut être constitué d'un matériau thermo rétractable. Dans ce cas, le cadre est fabriqué dans son état temporaire de mise en place et, une fois la vitre mise en place, l'ensemble est chauffé pour que le cadre se rétracte et prenne son état définitif rétracté de maintien.

### 6.5 Autres caractéristiques et avantages

Un aspect avantageux de l'invention est qu'il permet de mettre en oeuvre facilement des cadres de vitre monoblocs maintenant la vitre en chevauchant ses bords.

Les exemples de réalisation de l'invention représentés par les figure 1 et 2 concernent des panneaux vitrés 5 de forme rectangulaire. Les cadres 1 et 2 présentent donc chacun quatre portions sensiblement rectilignes, pour épouser la forme rectangulaire du panneau vitré 5. L'invention ne se limite bien sûr pas à ce cas particulier, mais s'applique au contraire aux panneaux vitrés de toute forme, entourés par un cadre.

### 6.6 Procédé de montage

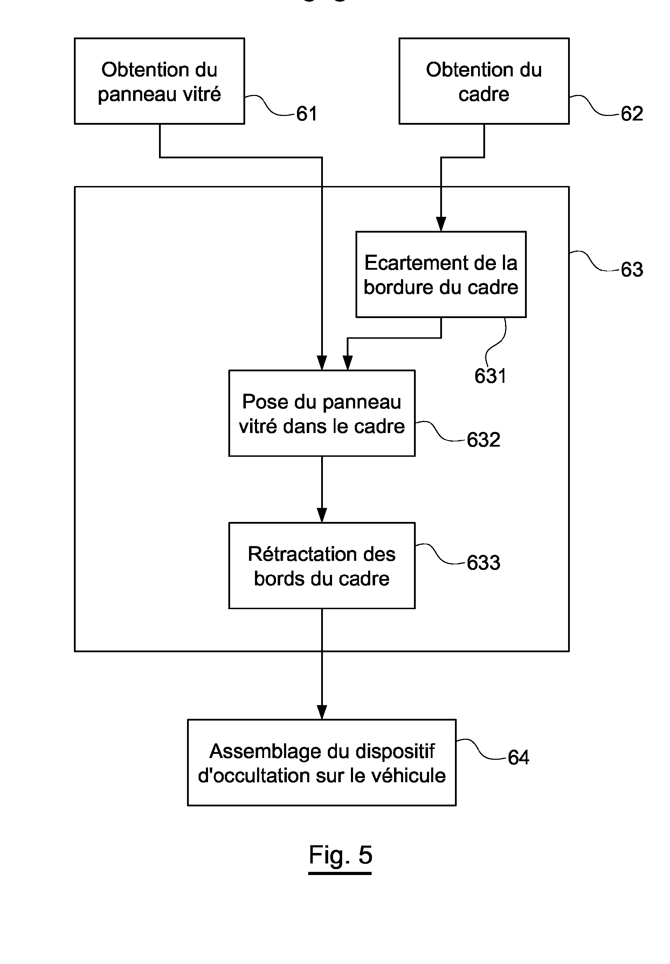

La figure 5 représente de façon schématique le procédé de montage d'un dispositif d'occultation selon l'invention. Les premières étapes sont l'étape d'obtention du panneau vitré 61 et l'étape d'obtention du cadre 62. Ces étapes peuvent être réalisées dans des lieux distincts.

Le bloc 63 regroupe les sous-étapes de l'assemblage du cadre sur la vitre. Ces sous-étapes comprennent une étape d'écartement de la bordure du cadre 631, sois par un moyen mécanique, soit par dilatation, une étape de pose du panneau vitré dans le cadre 632 et une étape de rétractation des bords du cadre 633. Les sous-étapes du bloc 63 peuvent être réalisées dans un lieux différent des précédents.

La dernière étape est l'étape d'assemblage du dispositif d'occultation sur le véhicule 64. Cette étape peut également être réalisée dans un lieux différent, par exemple chez le constructeur automobile.

## Revendications

1. Dispositif d'occultation d'une baie ménagée dans la carrosserie d'un véhicule, du type comprenant au moins un panneau vitré (5) sur lequel est monté un cadre (1, 2, 3), **caractérisé en ce que** ledit cadre (1, 2, 3) peut prendre au moins deux états :
- un état temporaire de mise en place, dans lequel les dimensions d'au moins une partie de la bordure intérieure (31) dudit cadre (1, 2, 3) sont supérieures aux dimensions dudit panneau vitré (5), de façon à permettre la mise en place dudit panneau vitré (5) dans ledit cadre (1, 2, 3) ;
- un état défmitif rétracté de maintien, dans lequel ladite bordure intérieure (31) dudit cadre (1, 2, 3) chevauche l'ensemble des bords (51) dudit panneau vitré (5).

2. Dispositif d'occultation selon la revendication 1 **caractérisé en ce que** ledit cadre (1, 2, 3) comprend au moins une zone élastique (15, 25) permettant, dans ledit état temporaire de mise en place, un allongement des bords dudit cadre (1, 2, 3) facilitant la mise en place dudit panneau vitré (5).

3. Dispositif d'occultation selon la revendication 2 **caractérisé en ce que** ledit cadre (1, 2, 3) comprend au moins trois portions sensiblement rectilignes et **en ce qu'**au moins deux desdites portions comprennent une desdites zones élastiques (15).

4. Dispositif d'occultation selon la revendication 2 **caractérisé en ce que** ledit cadre (1, 2, 3) comprend au moins trois portions sensiblement rectilignes et **en ce qu'**au moins deux des angles reliant lesdites portions constituent lesdites zones élastiques (25).

5. Dispositif d'occultation selon l'une quelconque des revendications 2 à 4 **caractérisé en ce que** lesdites zones élastiques et les zones non élastiques dudit cadre (1, 2, 3) présentent un aspect homogène.

6. Dispositif d'occultation selon l'une quelconque des revendications 2 à 5 **caractérisé en ce que** lesdites zones élastiques sont constituées de l'un des matériaux suivants : EPDM (Ethylène Propylène Diène Monomère), TPE (Thermo Plastique Elastomère), santoprene (marque déposée), élastomère, polyuréthane, ou silicone.

7. Dispositif d'occultation selon la revendication 1 **caractérisé en ce que** ledit cadre (1, 2, 3) est entièrement constitué d'un matériau élastique permettant, dans ledit état temporaire de mise en place, un allongement des bord dudit cadre (1, 2, 3) facilitant la mise en place dudit panneau vitré (5).

8. Dispositif d'occultation selon la revendication 1 **caractérisé en ce que** ledit cadre (1, 2, 3) est constitué d'un matériau dilatable à la chaleur permettant, dans ledit état temporaire de mise en place dans lequel ledit cadre (1, 2, 3) est chauffé, un allongement des bord dudit cadre (1, 2, 3) facilitant la mise en place dudit panneau vitré (5).

9. Dispositif d'occultation selon l'une quelconque des revendications 1 à 8 **caractérisé en ce que** ledit cadre (1, 2, 3) comprend ou porte un joint (4) destiné à venir en contact avec l'une des faces dudit panneau vitré (5).

10. Dispositif d'occultation selon l'une quelconque des revendications 1 à 9 **caractérisé en ce que** au moins une des faces dudit cadre (1, 2, 3) est affleurante avec la surface dudit panneau vitré (5).

11. Procédé de montage d'un dispositif d'occultation selon l'une quelconque des revendications 1 à 10, **caractérisé en ce qu'**il comprend les étapes suivantes :
- obtention dudit panneau vitré (5),
- obtention dudit cadre (1, 2, 3),
- écartement d'au moins un des bords dudit cadre (1, 2, 3), dans ledit état temporaire de mise en place
- pose dudit panneau vitré (5) dans ledit cadre (1, 2, 3),
- rétractation des bords dudit cadre (1, 2, 3), dans ledit état de maintien.

12. Véhicule automobile **caractérisé en ce qu'**il comprend au moins un dispositif d'occultation selon l'une quelconque des revendications 1 à 10.
